# FASCICULE DE BREVET EUROPEEN

(11) **EP 2 092 347 B1**
(45) Date de publication et mention de la délivrance du brevet: **17.05.2017**
(21) Numéro de dépôt: 07858452.1
(22) Date de dépôt: 16.10.2007
(51) Int. Cl.: G01N 35/04, G01N 35/10

(54) **APPAREIL ET PROCÉDÉ POUR MANIPULER DES TUBES, NOTAMMENT APPAREIL AUTOMATE D'ANALYSE SANGUINE**
VORRICHTUNG UND VERFAHREN ZUR HANDHABUNG VON RÖHRCHEN, INSBESONDERE AUTOMATISCHE BLUTANALYSEVORRICHTUNG
APPARATUS AND METHOD FOR HANDLING TUBES, ESPECIALLY AN AUTOMATED BLOOD ANALYSIS APPARATUS

(30) Priorité: 30.10.2006 FR 0609520
(43) Date de publication de la demande: 26.08.2009
(73) Titulaire: C2 DIAGNOSTICS, 34099 Montpellier (FR)
(72) Inventeur: CHAMPSEIX, Serge, 19170 Tarnac (FR); CHAMPSEIX, Henri, 34980 Saint Gely du Fesc (FR); DAMONNEVILLE, Laurent, 34170 Castelnau le Lez (FR)
(74) Mandataire: Pontet Allano & Associes
(86) Numéro de dépôt international: PCT/FR2007/001690
(87) Numéro de publication internationale: WO 2008/056040

(56) Documents cités:
- FR-A1- 2 692 358
- FR-A1- 2 730 315
- FR-A1- 2 812 088
- US-A- 4 518 264
- US-A- 4 609 017
- US-A- 4 921 676

## Description

La présente invention se rapporte à des dispositifs pour manipuler des casiers de tubes dans un appareil d'analyse, notamment un automate d'analyse sanguine automatique. La présente invention se rapporte aussi à des procédés associés, pour déplacer lesdits casiers dans l'appareil.

On va par la suite faire référence essentiellement à l'analyse de prélèvements sanguins. Cependant, cela ne doit pas être considéré comme limitatif.

A fin d'analyse, les prélèvements, notamment les prélèvements sanguins sont généralement contenus dans des tubes. Chaque tube est hermétiquement fermé par un bouchon qui peut être percé. Le prélèvement d'un échantillon dans le tube se fait au travers du bouchon, à l'aide d'une aiguille de prélèvement. Pour faciliter leur manipulation, ces tubes sont disposés dans des casiers. Chaque casier peut par exemple contenir 5 tubes disposés côte à côte, parallèles et sensiblement dans un même plan.

Durant le déplacement d'un casier dans l'appareil, le casier peut être soumis à plusieurs manipulations. Dans le cas général ces manipulations sont:
- le chargement du casier dans l'appareil ;
- le déchargement du casier, une fois des analyses faites ;
- le déplacement du casier dans l'appareil, notamment entre une position de chargement, une position d'analyse et une position de déchargement ; et,
- l'agitation du contenu du tube, en vue de son homogénéisation. Une telle homogénéisation est particulièrement utile dans le cas de prélèvements sanguins, afin de s'assurer que l'échantillon prélevé dans un tube est bien représentatif du contenu du tube.

La plupart des automates d'hématologie utilisent des dispositifs de chargement horizontal. Ces dispositifs sont encombrants, coûteux et complexes. Ils peuvent en outre, du fait de leur complexité, présenter des problèmes de fiabilité. De tels dispositifs de chargement sont décrits dans les documents FR2692358 et FR2812088. D'autres automates utilisent un chargement vertical magnétique. Un tel chargement magnétique, notamment décrit dans le document US4609017, impose la fixation d'une plaque métallique sur chaque casier et utilise un dispositif pneumatique pour charger ou décharger un casier par un mouvement de bas en haut.

Dans de tels dispositifs de chargement, il n'est pas possible d'assurer l'agitation des tubes.

Le déplacement des casiers dans un automate se fait généralement linéairement, les tubes étant sensiblement verticaux et leur bouchon étant en haut. Le casier y est généralement guidé par des rails. Dans de tels dispositifs de déplacement, il n'est pas possible d'assurer l'agitation des tubes. Le document US4609017 décrit un dispositif de déplacement utilisant un tapis roulant qui sert aussi de dispositif d'agitation. Cette solution ne permet pas une homogénéisation parfaite. Le dispositif est coûteux et reste d'une fiabilité limitée.

Pour l'agitation, outre le tapis roulant, d'autres dispositifs sont présentés dans les documents US4921676, FR2692358, FR2730315, FR2812088, US4518264. Ils permettent d'agiter un ou plusieurs tubes sortis en dehors d'un casier, ou un casier contenant des tubes. Ces dispositifs sont coûteux et complexes. En effet, ils nécessitent un mécanisme dédié à l'agitation, et un mécanisme pour retirer, avant l'agitation, puis retourner, après l'agitation, le casier ou les tubes dans le dispositif de déplacement

Une fois les opérations de prélèvement nécessaire effectuées dans les tubes d'un casier, le casier est disposé dans un réceptacle prévu à cet effet. De tels dispositifs sont décrits dans les documents FR2692358 et FR2812088. Le document US4609017 décrit quant à lui un système d'éjection à la verticale mu par un dispositif pneumatique.

Le but de l'invention est de proposer au moins un dispositif simplifié, fiable et efficace, parmi des dispositifs permettant la manipulation de casiers dans un automate d'analyse. En outre, un tel dispositif sera de préférence utilisable dans un automate adapté à être utilisé dans de petits laboratoires.

Un autre but de l'invention est de proposer au moins un procédé de manipulation de casiers, adapté pour être mis en oeuvre par un dispositif selon l'invention.

Encore un autre but de l'invention est de proposer un appareil, notamment un automate d'analyse sanguine, comprenant un dispositif selon l'invention et/ou mettant en oeuvre un procédé selon l'invention.

Selon un premier objectif de l'invention, un tel appareil comprend un dispositif pour déplacer au moins un casier dans ledit appareil, ledit casier formant support pour des tubes, appareil comprenant en outre des moyens de prélèvement d'un échantillon d'un produit contenu dans lesdits tubes, ledit dispositif de déplacement comprenant des moyens pour le guidage du casier lors d'un déplacement dudit casier et comprenant en outre des moyens d'agitation pour les moyens de guidage, ledit dispositif de déplacement étant monté sur un châssis dudit appareil. Cet appareil est particulièrement adapté pour être un automate d'analyse pour le produit, notamment un automate d'analyse sanguine. Les moyens de guidage sont des moyens de maintien pour le casier dans l'appareil, de sorte que lors de l'agitation, le casier est correctement maintenu dans l'appareil. Les moyens de guidages comprennent un rail coopérant avec une forme complémentaire du casier. Ce rail peut avoir une section transversale en forme d'un C dont deux extrémités opposées s'étendent l'une vers l'autre et formant chacune une nervure, lesdites nervures étant prévues pour venir en prise avec des gorges respectives de part et d'autre d'un casier. Une telle disposition permet le maintien du casier en même temps que son guidage, par la coopération des nervures et des formes complémentaires, par exemple des gorges, dans le casier.

Le dispositif de déplacement comprend des moyens de vis sans fin pour coopérer avec une forme complémentaire du casier, par exemple un écrou, de préférence partiel. Un moteur de translation pas à pas peut être prévu pour entraîner les moyens de vis sans fin en rotation. Ainsi, il est possible de connaître à tout instant une position d'un casier dans l'appareil, ce qui garantit, dans un appareil d'analyse, de connaître de façon certaine le contenu de quel tube est analysé. Le moteur de déplacement est monté rigidement relié aux moyens de guidage. Ainsi, l'agitation du casier ne provoque pas une rotation relative de la, ou des, vis sans fin par rapport aux moyens de guidage, donc un déplacement du casier le long des moyens de guidage, par exemple le long du rail.

Les moyens d'agitation sont conçus pour permettre une rotation du casier autour d'un axe parallèle à une direction pour le déplacement du casier, par exemple pour permettre le basculement des tubes entre une position dirigée vers le bas proche de la verticale, et une position, dirigée vers le haut, proche de la verticale, une telle agitation permettant de reproduire, avec une efficacité voisine, l'agitation qui peut être faite manuellement par un opérateur.

Pour une automatisation complète, un appareil selon l'invention comprend avantageusement un dispositif de chargement et/ou un dispositif de déchargement, pour le casier, lesdits dispositifs étant avantageusement fixés sur le châssis cde l'appareil.

Le dispositif de chargement peut comprendre un élément de stockage pour y empiler plusieurs casiers. L'élément de stockage peut être conçu pour permettre le déplacement gravitaire d'un casier dans l'élément de stockage. Dans le cadre d'un fonctionnement du type « premier entré / premier sorti », le dispositif de chargement peut comprendre des moyens pour extraire un casier le plus bas de la pile dans l'élément de stockage.

Les moyens d'extraction peuvent comprendre une vis sans fin prévue pour venir en prise avec une forme complémentaire du casier, par exemple une forme de type écrou, et un moteur de chargement, de préférence du type pas à pas, pour entraîner la vis sans fin.

La vis sans fin comprend avantageusement une zone tronquée dans laquelle les filets de la vis sans fin sont interrompus au-delà d'un plan parallèle à l'axe de rotation de ladite vis, ladite zone tronquée étant prévu pour permettre qu'un casier puisse prendre une position telle que la vis sans fin, après rotation autour dudit axe, puisse venir en prise avec ledit casier.

Un dispositif de déchargement pour un appareil selon l'invention comprend avantageusement un réceptacle pour des casiers déchargés. Le dispositif de déplacement peut être prévu pour déplacer un casier jusque dans une zone de réception du réceptacle.

Le réceptacle s'étend avantageusement, par exemple sur un côté de l'appareil, selon une direction sensiblement horizontale et sensiblement. perpendiculaire à un axe de déplacement pour un casier, dans le dispositif de déplacement, et en ce qu'il comprend en outre des moyens pour décaler chaque casier d'une distance au moins égale à l'épaisseur dudit casier, dans la direction d'extension du réceptacle. Ces moyens de décalage peuvent comprendre une came, ou plusieurs, mue par un moteur pas à pas.

Un système, notamment un système d'analyse sanguine comprenant un appareil selon l'invention et équipé de moyens de vis sans fin pour déplacer le casier, inclue avantageusement un casier comprenant des cannelures formant ensemble une portion d'écrou pour coopérer les moyens de vis sans fin. Un tel casier peut en outre être du type fermé, c'est-à-dire ayant une paroi de prélèvement en vis-à-vis de bouchons des tubes, ladite paroi de prélèvement étant percée d'orifices pour la pénétration d'une aiguille de prélèvement.

Selon un deuxième objectif de l'invention, un procédé pour manipuler un tube dans un appareil, ledit procédé comprend les étapes définies dans la revendication 22. Un tel procédé est avantageusement utilisé pour permettre le déplacement du tube et l'homogénéisation d'un produit sanguin contenu dans le tube, en vue de l'analyse de ce produit sanguin.

D'autres particularités et avantages de l'invention ressortiront encore de la description ci-après, relative à des exemples non limitatifs.

Aux dessins annexés :
- la figure 1 est une vue en perspective de trois-quarts avant, d'un automate d'analyse selon l'invention;
- la figure 2 est une vue générale et en perspective, de trois-quarts avant, d'un dispositif de chargement de l'automate de la figure 1;
- la figure 3 est une vue générale et en perspective, de trois-quarts arrière, à une échelle réduite, du dispositif de chargement de la figure 2;
- la figure 4 est une vue en perspective de trois-quarts arrière d'un dispositif de translation et d'agitation de l'automate de la figure 1;
- la figure 5 est une vue en perspective depuis l'avant et le dessus du dispositif de translation et d'agitation de l'automate de la figure 4;
- la figure 6 est une vue de profil et en perspective du dispositif de translation et d'agitation de l'automate de la figure 4;
- la figure 7 est une illustration schématique du chargement du casier de la figure 6 dans l'automate de la figure 1;
- la figure 8 est une vue en perspective d'un casier adapté pour être utilisé dans l'automate de la figure 1;
- la figure 9 est une illustration schématique du guidage et du maintien du casier de la figure 8 dans l'automate de la figure 1;
- la figure 10 est une vue en perspective d'un premier mode de réalisation pour un dispositif de déchargement pour l'automate de la figure 1; et,
- les figures 11 et 12 sont deux vue en perspective d'un deuxième mode de réalisation pour un dispositif de déchargement pour l'automate de la figure 1.

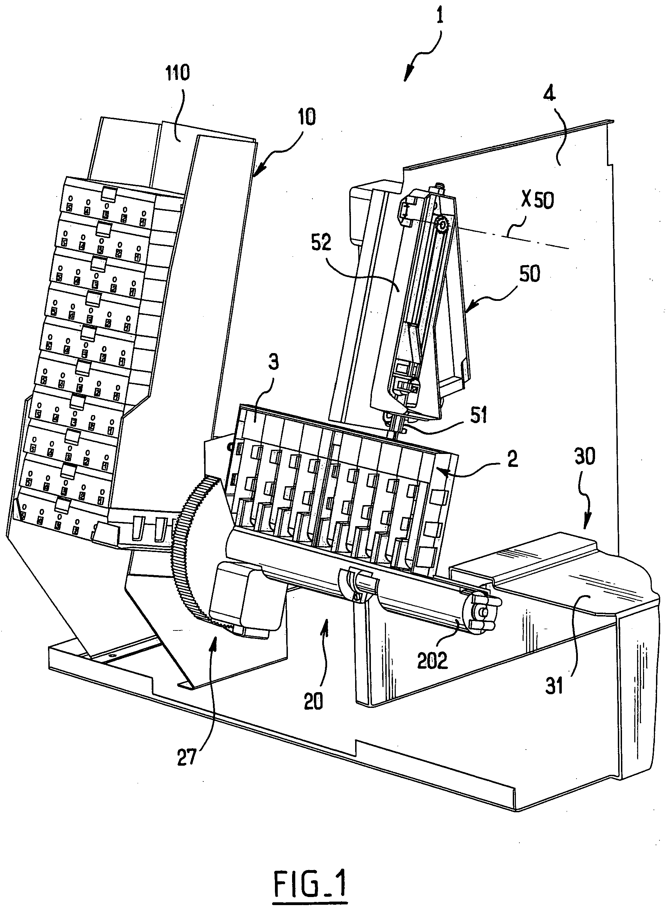

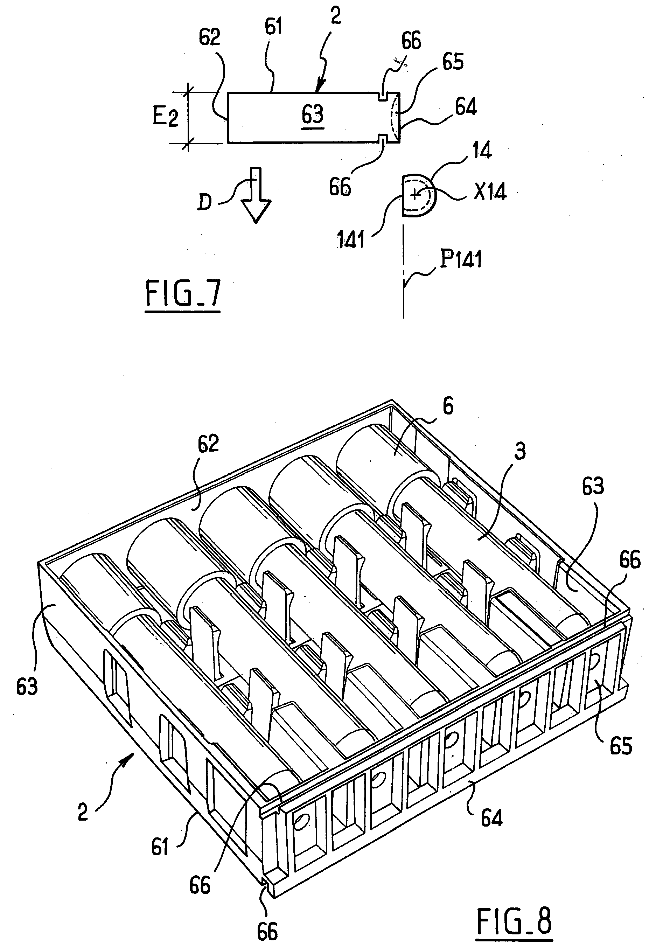

La figure 1 représente un automate d'analyse sanguine 1 selon l'invention. Cet automate permet la manipulation de casiers 2. Comme particulièrement illustré à la figure 8, chaque casier 2 est prévu pour contenir cinq tubes 3, chacun contenant un produit, ici un produit sanguin, à analyser. L'automate 1 comprend un dispositif de chargement 10, un dispositif de déplacement et d'agitation 20 et un dispositif de déchargement 30 pour les casiers 2. Le dispositif de déchargement est seulement partiellement représenté pour alléger la figure 1. Le dispositif de déplacement 20 est prévu pour permettre le déplacement d'un casier depuis une position de chargement, jusque dans une position de déchargement, en passant par une position intermédiaire de prélèvement pour un échantillon sanguin dans un des tubes. Le dispositif de déplacement comprend en outre des moyens d'agitation 27, prévus pour permettre l'agitation des tubes en vue de l'homogénéisation de leur contenu avant prélèvement.

L'automate 1 comprend en outre un dispositif de prélèvement 50, notamment une aiguille 51, pour l'échantillon, partiellement représentés à la figure 1, et des moyens d'analyse, non représentés, pour l'échantillon prélevé.

L'automate 1 comprend en outre un châssis 4 portant notamment l'ensemble des dispositifs et moyens 10,20,30,27,50 précités ainsi que les moyens d'analyse.

On va maintenant décrire plus particulièrement un casier 2 utilisable dans l'automate de la figure 1, en référence aux figures 7 et 8. Le casier 2 illustré à la forme d'une boîte. Cette boîte comprend un fond 61 et quatre parois latérales 62,63,64 autour du, et perpendiculaire au, fond 61. Le casier 2 illustré est prévu pour contenir jusqu'à cinq tubes 3; il est ici représenté plein. Les tubes 3 sont encliquetés de façon amovible sur le fond et parallèlement à celui-ci. Le casier 2 est entièrement ouvert à l'opposé du fond 61, de sorte que les tubes puissent être aisément introduits dans le casier ou en être retiré. Les parois latérales s'étendent depuis le fond sur une distance sensiblement constante, constituant une épaisseur E2 pour chaque casier. Dans l'exemple illustré aux figures, les casiers sont prévus identiques entre eux.

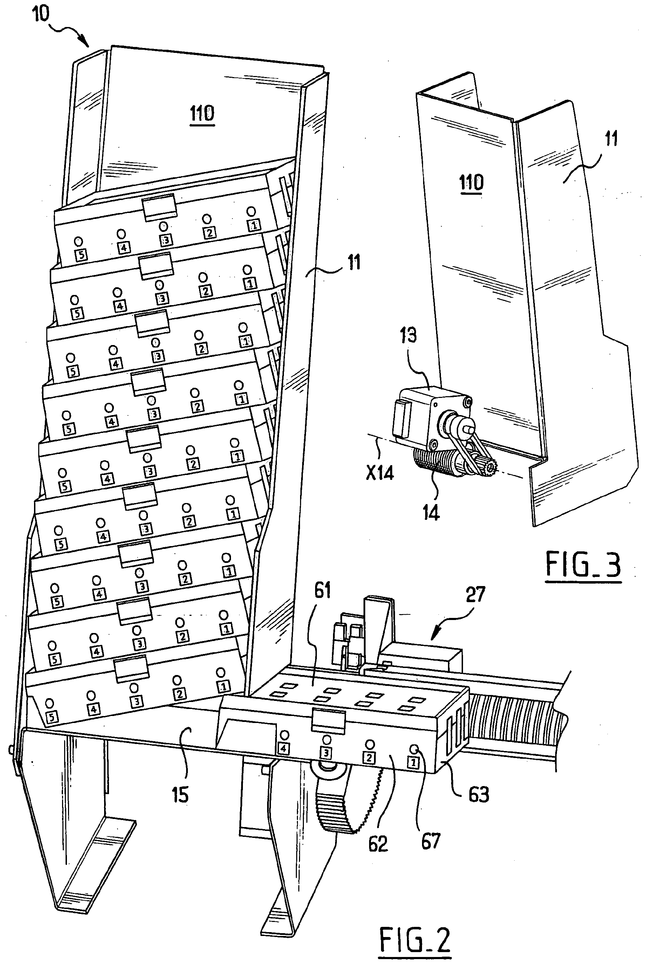

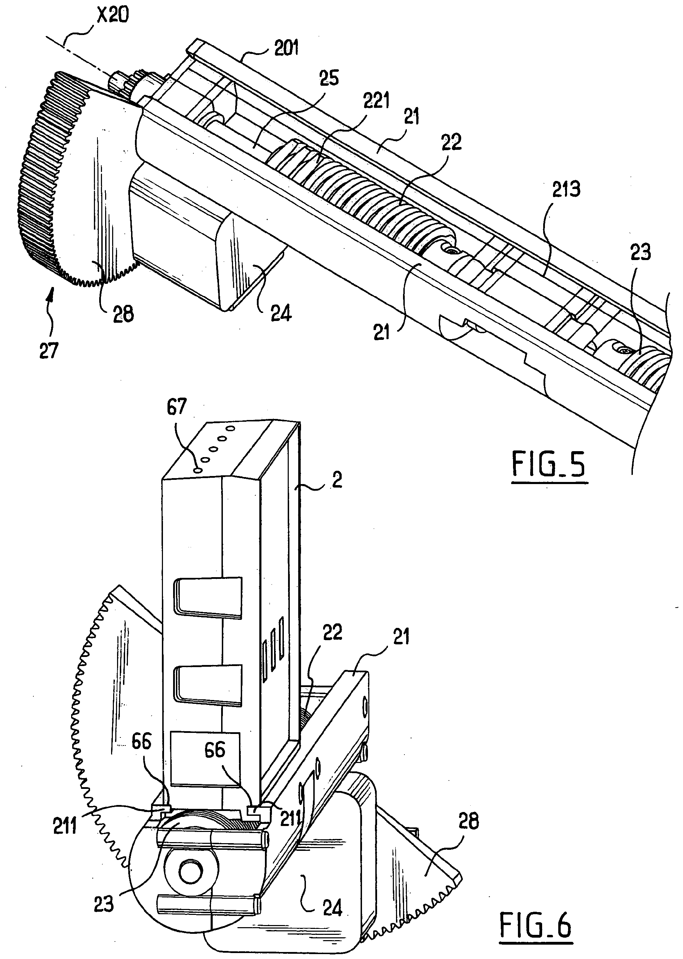

Parmi les parois latérales, une paroi de prélèvement 62 est disposée en vis-à-vis des bouchons 6 des tubes 3. La paroi de prélèvement 62 est percée d'orifices de prélèvement 67 (voir particulièrement aux figures 2,4 et 6). Chaque orifice 67 étant disposé pour être en vis-à-vis d'un bouchon 6 d'un tube 3 dans le casier 2, de sorte que l'aiguille de prélèvement 51, peut être introduite au travers de l'orifice 67 puis d'un bouchon 6 respectif pour faire un prélèvement dans un tube donné, comme illustré à la figure 1.

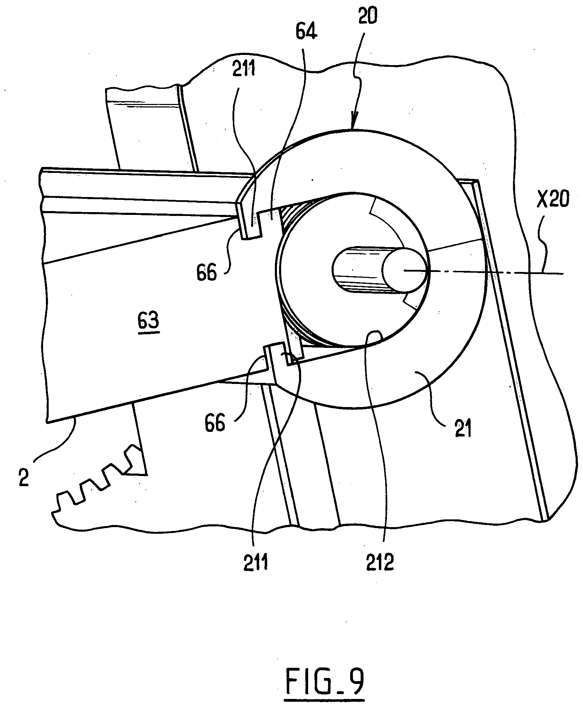

Une autre paroi latérale 64, opposée à la paroi de prélèvement 62, forme un talon 64 pour le casier. La face extérieure du talon 64 comprend des cannelures 65 s'étendant depuis le fond 61, transversalement au talon, de sorte que les cannelures 65 forment ensemble une partie d'écrou, susceptible de venir engrener avec une vis sans fin, pour le déplacement du casier dans l'automate. Le casier 2 comprend en outre, de part et d'autre du talon 64, des encoches 66 dans les parois latérales 63, encoches parallèles au talon 64 et prévues pour venir en prise avec un rail de guidage 21, pour le guidage en translation du casier dans l'automate (voir notamment la figure 9).

On va maintenant décrire le dispositif de chargement 10, plus particulièrement en référence à la figure 2. Dans l'exemple illustré, le dispositif de chargement comprend un élément de stockage 11, prévu pour permettre l'empilement sensiblement vertical de plusieurs casiers 2 empilés les uns sur les autres, dans une position de chargement.

L'élément de stockage 11 est légèrement incliné vers l'arrière. Ainsi, une paroi arrière 110 du dispositif de chargement 11 forme une rampe 110 inclinée de sorte que le talon 64 de chaque casier 2 reste en appui contre la rampe, ce qui permet un positionnement correct du talon, le déplacement du casier dans l'élément de stockage se faisant par gravité.

Dans la position de chargement, le fond 61 est au-dessus des tubes et la paroi de prélèvement 62 est orientée vers l'avant de l'automate. Le dispositif de chargement fonctionne selon le principe "premier entré / premier sorti", c'est-à-dire que c'est le casier en dessous de la pile, dans une position dite basse, qui sera extrait le premier du dispositif de chargement en vue de l'analyse de son contenu. Le déplacement des éventuels casiers 2 non encore extraits se fait par gravité, jusqu'à atteindre la position la plus basse. La figure 2 représente un casier en cours d'extraction, les autres casiers contenus dans l'élément de stockage prenant progressivement leur nouvelle position dans le dispositif de stockage.

On va maintenant décrire des moyens 13,14 pour extraire les casiers du dispositif de stockage 11. Les moyens d'extraction comprennent, un moteur de chargement 13 et une vis sans fin de chargement 14, d'axe X14 horizontal. La vis 14 est prévue pour être entraînée par le moteur 13. Le moteur est un moteur pas à pas.

La vis sans fin 14 est disposée à l'arrière de l'élément de stockage, de sorte qu'elle puisse venir en prise avec les cannelures 65 (voir figure 8) d'un casier lorsque celui-ci est dans la position basse. Comme illustré à la figure 7, la vis sans fin 14 comprend une zone tronquée 141. Dans la zone de troncature 141, au-delà d'un plan P141 parallèle à son axe de rotation X14, les filets de la vis sont interrompus. Ainsi, dans une position telle qu'illustrée à la figure 7, pour permettre la descente selon D d'un casier 2 dans la position la plus basse dans l'élément de stockage, la zone de troncature est disposée vers l'avant relativement à l'axe X14. Cette disposition permet à un casier de prendre la position basse sans être gêné par la présence de la vis 14. Lorsque le casier a pris la position basse, la mise en rotation de la vis 14 par le moteur 13, permet l'extraction du casier pour l'introduire dans le dispositif de déplacement et de basculement 20. Le pas de la vis 14 est orienté de sorte que le casier en cours d'extraction soit plaqué vers le bas sur une plaque 15, formant un fond pour l'élément de stockage 11. La plaque 15 sert de référence de positionnement relativement au dispositif de déplacement 20.

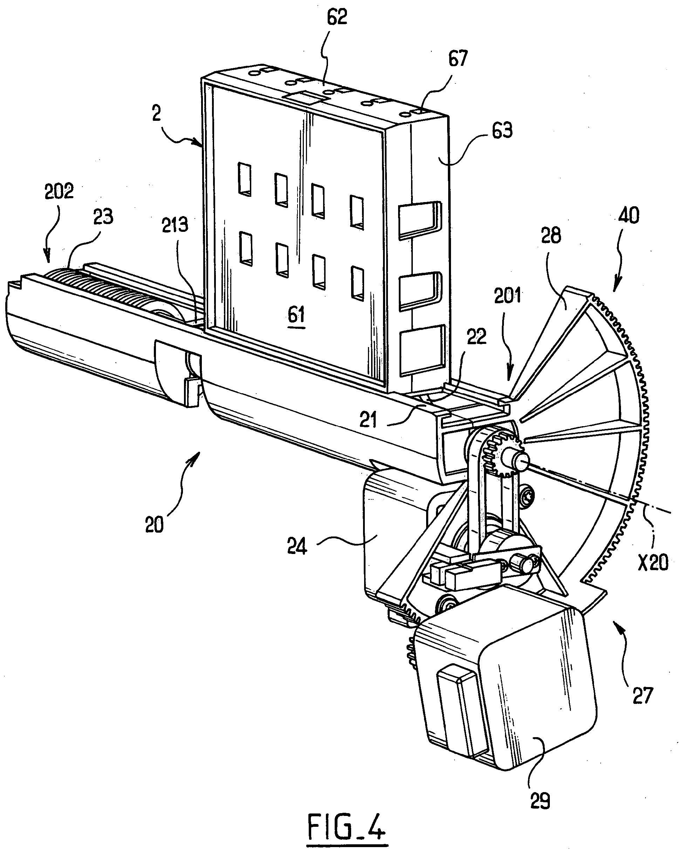

Le dispositif de déplacement 20 est notamment représenté isolé du reste de l'automate 1, aux figures 4-6. Le dispositif de déplacement 20 est structuré autour d'un axe de déplacement X20 qui se confond avec l'axe de chargement X14. Comme illustré à la figure1, il s'étend à l'avant de l'automate et transversalement à l'automate, entre une extrémité proximale 201, voisine du dispositif de chargement 10, et une extrémité distale 202, voisine du dispositif de déchargement 30.

Le dispositif de déplacement 20 comprend des moyens de guidage en translation 21. Comme particulièrement illustré à la figure 9, les moyens de guidage forment un rail 21 ayant une section sensiblement en forme de C transversalement et autour de l'axe X20. Des extrémités du C, s'étendent l'une vers l'autre et forment chacune une nervure 211. Les nervures sont prévues pour venir en prise dans les gorges 66 d'un casier 2, chacune des nervures 211 d'un côté respectif du talon 64 du casier 2. Le rail 21 comprend une surface intérieure 212 formant une portion de cylindre coaxiale avec l'axe X20. Pour permettre le montage du dispositif de déplacement, à titre d'exemple, dans l'exemple illustré, le rail est formé en deux parties symétriques selon un plan contenant l'axe de déplacement X20.

Le dispositif de déplacement 20 comprend en outre des moyens de déplacement par vis sans fin 22,23,24 pour entraîner le casier en déplacement transversal le long du rail 21. Ces moyens de vis sans fin comprennent plusieurs vis sans fin 22,23, montées sur un arbre d'entraînement 25, coaxial avec l'axe X20. Une première 22 des vis sans fin est disposée au voisinage immédiat de l'extrémité proximale 201, une deuxième 23 est disposée est disposée au voisinage immédiat de l'extrémité distale 202.

Les vis 22,23 sont montées en rotation à l'intérieur de la surface intérieur 212 du rail 21. L'arbre 25 est porté par des paliers 213 formés en deux parties, chacune d'une seule pièce avec une partie respective du rail. L'arbre 25, et les vis qu'il porte, sont entraînés en rotation par un moteur de translation 24. Le moteur de translation est monté fixe relativement au rail 21. Le moteur de translation est avantageusement un moteur pas à pas.

Le dispositif de déplacement 20 comprend aussi des moyens d'agitation 27. Les moyens d'agitation 27 comprennent un pignon 28 entraîné par un moteur 29. Le pignon 28 est un secteur denté formant un angle supérieur à 180°. Le secteur denté est centré sur l'axe de déplacement X20. Il est monté rigidement fixé sur le rail 21, et, dans l'exemple illustré, il est réalisé d'une seule pièce avec l'une au moins des parties du rail 21.

Lors de l'extraction d'un casier 2 depuis l'élément de stockage 11, le rail 21 est disposé de sorte que le casier extrait vienne en prise avec le rail, c'est-à-dire que les nervures 211 viennent en prise avec les encoches 66 du casier 2. La vis 14 du dispositif de chargement 10 déplace le casier en cours d'extraction jusqu'à ce qu'il vienne en prise avec le rail. La première vis de déplacement 22 comprend à son extrémité proximale une troncature 221 similaire à la troncature 141 de la vis 14. Lorsque le casier est suffisamment avancé sur le rail, le long de la troncature 221 de la vis de déplacement 22, la première vis de déplacement 22 est mise en rotation et vient en prise avec le talon 65 du casier 2 qu'elle entraîne le long de la troncature 141 de la vis 14 jusqu'à ce qu'il soit complètement extrait de l'élément de stockage 11 puis, au-delà, le long du rail 21.

Un fois complètement extrait et pris en charge par le dispositif de déplacement 20, le casier peut être agité pour permettre l'homogénéisation de son contenu. Pour l'agitation, on utilise les moyens d'agitation 27, c'est-à-dire que l'on provoque la rotation du rail autour de son axe X20, donc le basculement du casier porté par le rail. Ainsi, le casier qui a été extrait sensiblement à l'horizontale depuis l'élément de chargement 11, peut être basculé vers le bas, de sorte que les tubes contenus se retrouvent bouchon vers le bas, ou basculé vers le haut, c'est-à-dire que les tubes se trouvent bouchons vers le haut. Ainsi, par un mouvement alternatif de haut en bas et de bas en haut, on peut agiter les tubes d'un mouvement proche de celui qui peut être fait manuellement par un opérateur. Ce mouvement est donc particulièrement efficace. Les nervures 211 des moyens de guidage, en prise avec les gorges 66 du casier 2, assure le maintien du casier dans le dispositif de déplacement 20, donc dans l'automate, au cours de son déplacement ou de son agitation, quelle que soit la position du casier autour de l'axe de déplacement X20.

L'utilisation combinée des moyens de déplacement par vis sans fin et des moyens de basculement permet aussi d'amener le casier dans une position haute, légèrement basculé vers l'arrière, telle qu'illustré à la figure 1, position dans laquelle l'aiguille de prélèvement 51 peut pénétrer le bouchon 6 d'un tube 3 disposé en vis-à-vis de l'aiguille 51 pour y prélever un échantillon sanguin.

Dans un mode de réalisation préféré, on peut interrompre les opérations automatiques et amener le rail dans une position basse, non représentée, c'est-à-dire que le ou les casiers éventuellement portés par le rail sont dirigés vers le bas. L'aiguille est alors libre d'accès et un opérateur peut présenter manuellement un tube isolé pour y prélever un échantillon. L'aiguille est montée sur un balancier 52 articulé autour d'un axe horizontal X50, de sorte que l'aiguille peut être basculée vers l'avant pour faciliter le prélèvement dans le tube isolé.

Le rail est suffisamment long pour que plusieurs casiers, deux casiers dans l'exemple illustré, soient en prise simultanée avec le rail, tout en permettant son basculement. Lors de l'introduction d'un nouveau casier, le casier précédent peut être ramené vers le dispositif de chargement, de sorte que le casier nouvellement extrait vienne se coller au casier précédent. Ainsi, la position du casier suivant est parfaitement connue relativement à celle du casier précédent. En outre, du fait que le moteur de déplacement est rigidement fixé au rail, le basculement ne provoque pas de rotation des moyens de vis 22,23 relativement au rail 21 et chaque casier reste immobile en translation pendant le basculement. En outre, l'utilisation d'un moteur pas à pas, notamment pour le moteur de déplacement, permet de déplacer les casiers 2 sur le rail 21 en connaissant à tout moment la position de chaque tube. Ainsi, les casiers peuvent être successivement déplacés dans l'automate, depuis le dispositif de chargement 10, jusque dans le dispositif de déchargement 30, sans risque de se tromper de tube.

En particulier, il peut être utile de faire une nouvelle analyse sur le contenu d'un tube déjà analysé, par exemple pour contrôler un résultat, alors que ledit tube déjà analysé est disposé dans un casier précédent un casier en cours d'analyse. Le temps nécessaire pour obtenir les résultats d'une analyse est plus court que le temps nécessaire pour prélever les échantillons des tubes contenus dans un seul casier. Ainsi, le casier précédent étant encore sur le rail, il est possible en inversant la rotation des vis de déplacement 22,23, de faire reculer le casier précédent pour une nouvelle analyse. Grâce à la précision de positionnement, le tube déjà analysé sera de nouveau analysé avec la certitude ne pas se tromper de tube.

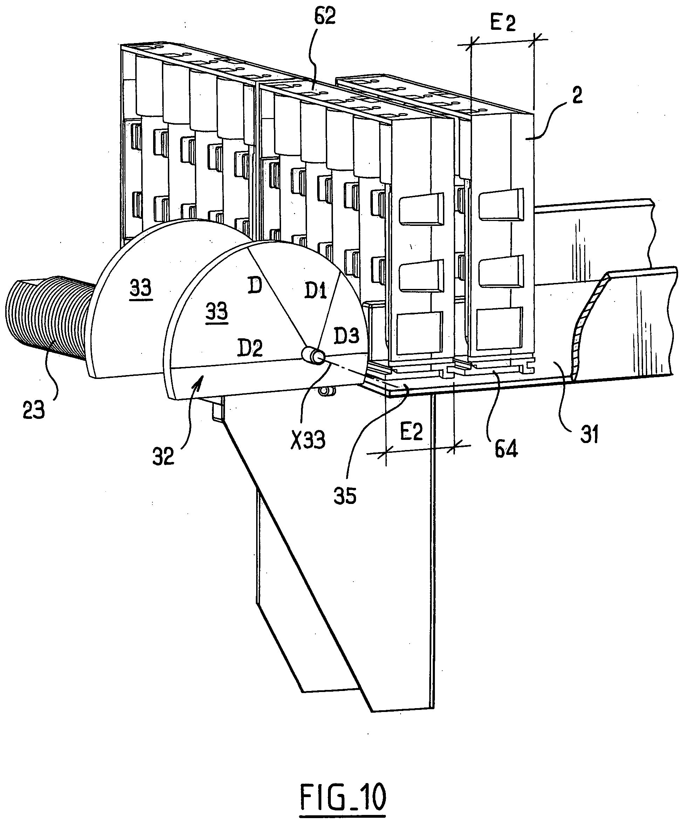

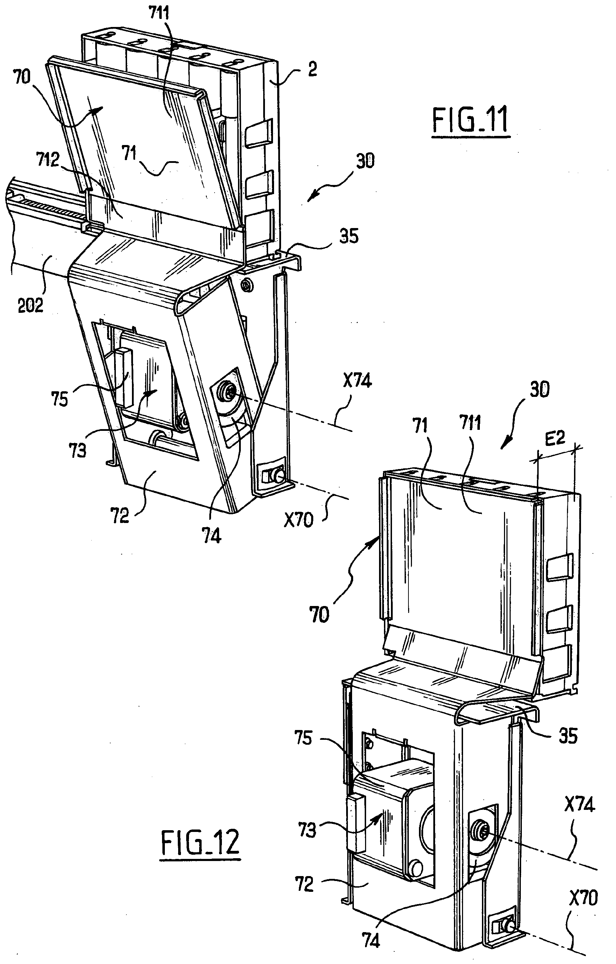

Après l'analyse des tubes contenus dans un casier, le casier peut être retiré de l'automate en vue d'être réutilisé ultérieurement, avec de nouveaux tubes. Un automate selon l'invention comprend avantageusement un dispositif de déchargement 30, tel qu'illustré partiellement à la figure 1, et dont deux modes de réalisation sont illustrés respectivement à la figure 10 et aux figures 11,12.

On va d'abord décrire un premier mode de réalisation pour un dispositif de déchargement 30 illustré par la figure 10. Le dispositif de déchargement 30 comprend un réceptacle 31 pour recevoir les casiers déjà analysés. A la figure 1, seul le réceptacle 31 est représenté. Le réceptacle 31 est disposé sur la droite de l'automate 1, au voisinage de l'extrémité distale 202 du dispositif de déplacement 20. Il comprend une zone de réception 35, située à l'avant du réceptacle 31, pour recevoir les casiers immédiatement issus du dispositif de déplacement 20. La zone de réception 35 est au voisinage immédiat et dans l'alignement de l'extrémité distale 202. Le réceptacle 31 s'étend sensiblement horizontalement, depuis la zone de réception 35, vers l'arrière de l'automate. Le réceptacle est prévu pour recevoir les casiers disposés verticalement, les talons 64 orientés vers le bas et les fonds 61 des casiers étant orientés vers l'arrière, de sorte que l'épaisseur E2 des casiers s'étend horizontalement, d'avant en arrière.

Dans le mode de réalisation particulièrement illustré à la figure 10, le dispositif de déchargement 30 comprend en outre des moyens de décalage 32, pour le décalage successif des casiers déchargés depuis la zone de réception vers l'arrière du réceptacle 31. Les moyens de décalage 32 comprennent deux cames 33. Les deux cames sont montées en rotation autour d'un axe de cames horizontal X33. L'axe de cames 33 est sensiblement parallèle à l'axe de déplacement X20. Les cames sont mues en rotation autour de l'axe de cames X33 par un moteur pas à pas, non représenté à la figure 10. Les cames 33 sont prévues pour venir en appui simultané, chacune contre une paroi latérale 63 respective d'un casier dans la zone de réception 35. Les. cames sont identiques entre elles. Chaque came a la forme d'un disque excentré relativement à l'axe de cames X33, de sorte la distance D à l'axe X33 varie au moins entre un petite distance à l'axe D1 et une grande distance à l'axe D2, la différence D2-D1 étant égale à l'épaisseur H2 d'un casier 2.

Le déchargement d'un casier, depuis le dispositif de déplacement 20 se fait lorsque le casier à décharger est basculé verticalement vers le haut, c'est-à-dire lorsque la paroi de prélèvement est orientée vers le haut. En outre, afin que la zone de réception soit libre d'accès, les cames doivent, préalablement au déchargement, être disposées de sorte qu'elle présentent en vis-à-vis de la zone de réception 35 une distance D3 à l'axe X33 inférieure ou égale à la petite distance D1. Par l'action de la deuxième vis sans fin de déplacement 23 sur son talon 64, le casier à décharger est amené jusque dans la zone de réception 35. Ensuite, les cames sont mises en rotation de sorte que la distance D à l'axe X33, en vis-à-vis de la zone de réception 35 augmente progressivement. Lors la distance atteint D1, les cames viennent en contact avec le casier et commencent à le décaler vers l'arrière du réceptacle 31, jusqu'à ce que la distance D atteigne ou dépasse la distance D1. La zone de réception est alors de nouveau dégagée, prête au déchargement d'un nouveau casier. Chaque casier décalé par le dispositif de décalage vient en appui sur un éventuel casier précédemment décalé, formant progressivement une ligne de casiers déchargés. Le réceptacle 31 est avantageusement conçu pour pouvoir recevoir un nombre de casiers au moins égal au nombre de casiers prévus pour être stockés dans l'élément de stockage 11.

On va maintenant décrire un deuxième mode de réalisation, préféré, pour un dispositif de déchargement 30 illustré par les figures 11 et 12, essentiellement en ce qu'il diffère du mode de réalisation illustré à la figure 10. Dans ce deuxième mode de réalisation, les zones de réception 35 et le réceptacle 31 sont similaires à ceux précédemment décrit. Par contre, le système de décalage 70 utilisé ici est un système à palette 70. Le système de décalage 70 comprend une palette 71 formée d'une seule pièce avec un caisson 72. Le caisson et la palette sont formés et disposés de sorte que la palette s'étend sensiblement depuis le caisson, vers le haut, au-dessus de la zone de réception 35, et le caisson 72 s'étend vers le bas, depuis la palette, en dessous de la zone de réception 35. Le caisson est librement articulé autour d'un axe de palette X70. L'axe de palette X70 est sensiblement parallèle à l'axe X20. L'axe X70 est disposé par la partie basse du caisson.

La figure 11 illustre une position d'attente pour le système de poussée 70. La figure 12 illustre une position de poussée pour le système de poussée. Le système de poussée est monté mobile en rotation autour de l'axe X70, entre la position d'attente et la position de poussée. Le mouvement du système de poussée entre les deux positions est assuré par des moyens de basculement 73. Ces moyens de basculement comprennent un excentrique 74 monté en rotation autour d'un axe d'excentrique X74, parallèle à l'axe de palette X70. L'excentrique est entraîné en rotation par un moteur 75. Il est monté à l'intérieur du caisson 72, entre deux parois opposées dudit caisson, de sorte que sa rotation, en appui sur les parois opposées, provoque le basculement du caisson donc de la palette 71.

La palette présente une zone de raccordement 712 avec le caisson 72, formée de sorte que, dans la position d'attente, la zone de raccordement 712 forme une paroi plane et verticale qui sert de guide, à l'avant de la zone de réception 35, pour un casier 2 introduit par les moyens de déplacement 20 dans la zone de réception 35. Dans la position d'attente, une zone de poussée 711 de la palette 71 forme une paroi plane s'étendant depuis la zone de raccordement vers le haut et vers l'avant depuis la zone de raccordement 712. La zone de poussée 711 est formée de sorte que dans la position de poussée, la zone de poussée est verticale, et disposée au-delà de la zone de réception vers l'arrière.

Ainsi, lorsque un casier est introduit dans la zone de réception 35, il est d'abord guidé par la zone de raccordement 712. Puis, lorsque le casier est totalement dans la zone de réception, c'est-à-dire que notamment il n'est plus en prise avec le dispositif de guidage 20, le basculement de la palette vers l'arrière jusqu'à la position de poussée permet d'amener le casier sur le réceptacle 31, en poussant d'éventuels casiers précédemment déchargés et en libérant simultanément la zone de réception 35.

Bien sûr, l'invention n'est pas limitée aux exemples qui viennent d'être décrits et de nombreux aménagements peuvent être apportés à ces exemples sans sortir du cadre de l'invention.

Notamment, l'automate peut être prévu pour être utilisé avec d'autres types de casier, notamment des casiers prévus pour contenir un nombre de tubes différent, ou des casiers ouverts, c'est-à-dire ne comprenant pas de paroi en vis-à-vis des bouchons.

Au lieu d'un chargement gravitaire des casiers, il peut être prévu un chargement mécanique, par exemple horizontal, par exemple avec des moyens de poussée similaires aux moyens de déchargement, ou bien par l'action d'un ressort.

L'agitation peut aussi être prévue par une rotation quelconque, pouvant même aller jusqu'à 360°. Il est cependant préférable d'assurer au moins un basculement à 180°, entre une position proche de la verticale vers le haut et une position proche de la verticale vers le bas.

La notion de rail doit être comprise de façon large. Par exemple, la fonction du rail peut être assurée par des moyens de guidage et de maintien au moins partiellement magnétiques.

## Revendications

1. Appareil (1) comprenant un dispositif pour déplacer (20) au moins un casier (2) formant support pour des tubes (3), ledit appareil (1) comprenant en outre des moyens de prélèvement (50) d'un échantillon d'un produit contenu dans lesdits tubes, ledit dispositif de déplacement (20) comprenant des moyens pour le guidage (21) du casier lors d'un déplacement dudit casier selon un axe de déplacement (X20) et des moyens pour agiter (27) lesdits moyens de guidage, **caractérisé en ce qu'**il comprend :
- une vis sans fin, pour déplacer le casier, susceptible de venir engrener avec des cannelures (65) s'étendant depuis le fond (61), transversalement à une paroi latérale (64) du casier formant talon (64),
- un rail de guidage (21) compris dans les moyens de guidage, pour le guidage en translation du casier, apte à venir en prise avec des encoches (66) réalisées, de part et d'autre et parallèles au talon (64), dans les parois latérales (63) du casier, et
- les moyens d'agitation pour provoquer la rotation du rail de guidage (21) autour d'un axe (X20) parallèle à une direction pour le déplacement du casier,
- un moteur de translation (24) pas à pas pour entraîner les moyens de vis sans fin (22,23) en rotation, ce moteur de translation (24) étant monté rigidement relié aux moyens de guidage.

2. Appareil selon la revendication 1, **caractérisé en ce que** ledit appareil est un automate d'analyse pour le produit.

3. Appareil selon la revendication 1 ou 2, **caractérisé en ce que** le rail a une section transversale en forme d'un C dont deux extrémités opposées s'étendent l'une vers l'autre et formant chacune une nervure (211), lesdites nervures étant prévues pour venir en prise avec des gorges (66) respectives de part et d'autre du casier.

4. Appareil selon la revendication 3, **caractérisé en ce que** les moyens de vis sans fin sont disposés à l'intérieur de la section en forme de C.

5. Appareil selon l'une des revendications 1 à 4, **caractérisé en ce que** les moyens d'agitation comprennent un pignon (28) monté rigidement fixé aux moyens de guidage (21).

6. Appareil selon la revendication 5, **caractérisé en ce que** les moyens d'agitation comprennent en outre un moteur d'agitation (29) pas à pas pour entraîner le pignon (28).

7. Appareil selon l'une des revendications 1 à 6, **caractérisé en ce que** les moyens d'agitation (27) sont conçus pour permettre le basculement des tubes entre une position dirigée vers le bas et une position dirigée vers le haut.

8. Appareil selon l'une des revendications 1 à 7, **caractérisé en ce qu'**il comprend en outre un dispositif de chargement (10).

9. Appareil selon la revendication 8, **caractérisé en ce que** le dispositif de chargement comprend un élément de stockage (11) pour pouvoir y empiler plusieurs casiers (2).

10. Appareil selon la revendication 9, **caractérisé en ce que** l'élément de stockage est conçu pour permettre le déplacement gravitaire de chaque casier dans l'élément de stockage.

11. Appareil selon la revendication 9 ou 10, **caractérisé en ce qu'**il comprend des moyens (13,14) pour extraire un casier le plus bas de la pile dans l'élément de stockage.

12. Appareil selon la revendication 11 **caractérisé en ce que** les moyens d'extraction comprennent une vis sans fin (14) prévue pour venir en prise avec une forme complémentaire (65) du casier.

13. Appareil selon la revendication 12, **caractérisé en ce qu'**il comprend un moteur de chargement (13) pas à pas pour entraîner la vis sans fin.

14. Appareil selon la revendication 12 ou 13, **caractérisé en ce que** la vis sans fin comprend une zone tronquée (141) dans laquelle les filets de la vis sans fin (14) sont interrompus au-delà d'un plan (P141) parallèle à l'axe de rotation (X14) de ladite vis, ladite zone tronquée étant prévue pour permettre qu'un casier puisse prendre une position telle que la vis sans fin, après rotation autour dudit axe (X14), puisse venir en prise avec ledit casier.

15. Appareil selon l'une des revendications 1 à 14, **caractérisé en ce qu'**il comprend en outre un dispositif de déchargement (30).

16. Appareil selon la revendication 15, **caractérisé en ce que** le dispositif de déchargement comprend un réceptacle (31) pour des casiers déchargés.

17. Appareil selon la revendication 16, **caractérisé en ce que** le dispositif de déplacement (20) est prévu pour déplacer un casier jusque dans une zone de réception (35) du dispositif de déchargement (30).

18. Appareil selon la revendication 17, **caractérisé en ce que** le réceptacle (31) s'étend selon une direction sensiblement horizontale et sensiblement perpendiculaire à un axe de déplacement (X20) pour un casier, dans le dispositif de déplacement, et **en ce qu'**il comprend en outre des moyens pour décaler (32,70) chaque casier d'une distance au moins égale à l'épaisseur (E2) dudit casier, dans la direction d'extension du réceptacle (31).

19. Appareil selon la revendication 18, **caractérisé en ce que** les moyens de décalage comprennent une came (33) ou une palette (71) mue par un moteur pas à pas.

20. Système comprenant un appareil selon l'un des revendications 1 à 19 et au moins un casier, ledit appareil comprenant des moyens de vis sans fin pour déplacer ledit casier, **caractérisé en ce que** ledit casier comprend des cannelures (65) formant ensemble une portion d'écrou pour coopérer avec les moyens de vis sans fin.

21. Système selon la revendication 20, **caractérisé en ce que** le casier est du type fermé, c'est-à-dire ayant une paroi de prélèvement (62) en vis-à-vis de bouchons des tubes, ladite paroi de prélèvement étant percée d'orifices pour la pénétration d'une aiguille de prélèvement (52).

22. Procédé pour manipuler un tube dans un appareil selon la revendication 1, **caractérisé en ce que** ledit procédé comprend :
- la disposition du tube dans un casier (2) prévu pour servir au support dudit tube ;
- le déplacement du casier (2) selon un axe de déplacement (X20) ; le casier comprenant une paroi de prélèvement (62) et une paroi latérale (64), opposée à la paroi de prélèvement (62) et formant un talon (64) pour le casier, une face extérieure du talon (64) comprenant des cannelures (65) s'étendant depuis le fond (61), transversalement au talon, de sorte que les cannelures (65) forment ensemble une partie d'écrou, susceptible de venir engrener avec une vis sans fin, pour le déplacement du casier,
- l'utilisation d'un rail de guidage (21) pour le guidage et le maintien du casier (2) dans l'appareil, le casier (2) comprenant en outre, de part et d'autre du talon (64), des encoches (66) dans les parois latérales (63), encoches parallèles au talon (64) et prévues pour venir en prise avec le rail de guidage (21),
- provoquer la rotation du rail de guidage (21) portant le casier, autour d'un axe (X20) parallèle à une direction pour le déplacement du casier, et,
- entraîner les moyens de vis sans fin (22,23) en rotation au moyen d'un moteur de translation (24) pas à pas, ce moteur de translation (24) étant monté rigidement relié aux moyens de guidage.

23. Procédé selon la revendication 22, **caractérisé en ce qu'**il est utilisé pour permettre le déplacement du tube et l'homogénéisation d'un produit sanguin contenu dans le tube, en vue de l'analyse de ce produit sanguin.

## Patentansprüche

1. Gerät (1), enthaltend eine Verlagerungsvorrichtung (20) zum Verlagern zumindest eines Fachs (2), das einen Halter für Röhrchen (3) bildet, wobei das Gerät (1) ferner Entnahmeeinrichtungen (50) zum Entnehmen einer Probe eines in den Röhrchen enthaltenen Produkts aufweist, wobei die Verlagerungsvorrichtung (20) Führungseinrichtungen (21) zum Führen des Fachs bei einer Verlagerung des Fachs in einer Verlagerungsachse (X20) und Schütteleinrichtungen (27) zum Schütteln der Führungseinrichtungen enthält, **dadurch gekennzeichnet, dass** es enthält:
- eine Schnecke zum Verlagern des Fachs, die mit Rillen (65) kämmen kann, die sich vom Boden (61) quer zu einer einen Absatz (64) bildenden Seitenwand (64) des Fachs erstrecken,
- eine in den Führungseinrichtungen enthaltene Führungsschiene (21) für die translatorische Führung des Fachs, die dazu geeignet ist, mit Einkerbungen (66) in Eingriff zu gelangen, die beiderseits des Absatzes (64) parallel zu diesem in den Seitenwänden (63) des Fachs ausgeführt sind, und
- Schütteleinrichtungen, um die Drehung der Führungsschiene (21) um eine Achse (X20) parallel zu einer Richtung zur Verlagerung des Fachs hervorzurufen,
- einen Verschiebe-Schrittmotor (24) zum drehenden Antreiben der Schneckeneinrichtungen (22, 23), wobei dieser Verschiebemotor (24) starr mit den Führungseinrichtungen verbunden gelagert ist.

2. Gerät nach Anspruch 1, **dadurch gekennzeichnet, dass** das Gerät ein Automat zum Analysieren des Produkts ist.

3. Gerät nach Anspruch 1 oder 2, **dadurch gekennzeichnet, dass** die Schiene einen C-förmigen Querschnitt hat, bei dem die beiden entgegengesetzten Enden aufeinander zu verlaufen und jeweils eine Rippe (211) bilden, wobei die Rippen dazu vorgesehen sind, mit jeweiligen Nuten (66) beiderseits des Fachs in Eingriff zu gelangen.

4. Gerät nach Anspruch 3, **dadurch gekennzeichnet, dass** die Schneckeneinrichtungen innerhalb des C-förmigen Querschnitts angeordnet sind.

5. Gerät nach einem der Ansprüche 1 bis 4, **dadurch gekennzeichnet, dass** die Schütteleinrichtungen ein Ritzel (28) enthalten, das an den Führungseinrichtungen (21) starr befestigt gelagert ist.

6. Gerät nach Anspruch 5, **dadurch gekennzeichnet, dass** die Schütteleinrichtungen ferner einen Schüttel-Schrittmotor (29) zum Antreiben des Ritzels (28) enthalten.

7. Gerät nach einem der Ansprüche 1 bis 6, **dadurch gekennzeichnet, dass** die Schütteleinrichtungen (27) dazu ausgelegt sind, das Verschwenken der Röhrchen zwischen einer nach unten gerichteten Stellung und einer nach oben gerichteten Stellung zu gestatten.

8. Gerät nach einem der Ansprüche 1 bis 7, **dadurch gekennzeichnet, dass** es ferner eine Ladevorrichtung (10) enthält.

9. Gerät nach Anspruch 8, **dadurch gekennzeichnet, dass** die Ladevorrichtung ein Speicherelement (11) enthält, um darin mehrere Fächer (2) stapeln zu können.

10. Gerät nach Anspruch 9, **dadurch gekennzeichnet, dass** das Speicherelement dazu ausgelegt ist, die schwerkraftbedingte Verlagerung eines jeden Faches in dem Speicherelement zu gestatten.

11. Gerät nach Anspruch 9 oder 10, **dadurch gekennzeichnet, dass** es Einrichtungen (13, 14) zum Herausziehen eines untersten Fachs aus der Stapelung im Speicherelement enthält.

12. Gerät nach Anspruch 11, **dadurch gekennzeichnet, dass** die Auszieheinrichtungen eine Schnecke (14) enthalten, die dazu vorgesehen ist, mit einer komplementären Form (65) des Fachs in Eingriff zu gelangen.

13. Gerät nach Anspruch 12, **dadurch gekennzeichnet, dass** es einen Lade-Schrittmotor (13) enthält, um die Schnecke anzutreiben.

14. Gerät nach Anspruch 12 oder 13, **dadurch gekennzeichnet, dass** die Schnecke einen abgestumpften Bereich (141) aufweist, in welchem die Schneckengänge der Schnecke (14) über eine Ebene (P141) hinaus unterbrochen sind, die sich parallel zur Drehachse (X14) der Schnecke erstreckt, wobei der abgestumpfte Bereich dazu vorgesehen ist, einem Fach zu gestatten, eine solche Stellung einnehmen zu können, dass die Schnecke nach Drehung um die Achse (X14) in Eingriff mit dem Fach kommen kann.

15. Gerät nach einem der Ansprüche 1 bis 14, **dadurch gekennzeichnet, dass** es ferner eine Entladevorrichtung (30) enthält.

16. Gerät nach Anspruch 15, **dadurch gekennzeichnet, dass** die Entladevorrichtung einen Behälter (31) für entladene Fächer enthält.

17. Gerät nach Anspruch 16, **dadurch gekennzeichnet, dass** die Verlagerungsvorrichtung (20) dazu vorgesehen ist, ein Fach bis in einen Aufnahmebereich (35) der Entladevorrichtung (30) zu verlagern.

18. Gerät nach Anspruch 17, **dadurch gekennzeichnet, dass** der Behälter (31) sich in einer Richtung im Wesentlichen horizontal und im Wesentlichen senkrecht zu einer Verlagerungsachse (X20) für ein Fach in der Verlagerungsvorrichtung erstreckt und dass es ferner Einrichtungen (32, 70) zum Versetzen eines jeden Fachs um einen Abstand zumindest gleich der Dicke (E2) des Fachs in der Erstreckungsrichtung des Behälters (31) enthält.

19. Gerät nach Anspruch 18, **dadurch gekennzeichnet, dass** die Versetzeinrichtungen einen Nocken (33) bzw. eine Palette (71) enthalten, der bzw. die von einem Schrittmotor bewegt wird.

20. System mit einem Gerät nach einem der Ansprüche 1 bis 19 und mit zumindest einem Fach, wobei das Gerät Schneckeneinrichtungen zum Verlagern des Fachs enthält, **dadurch gekennzeichnet, dass** das Fach Rillen (65) aufweist, die zusammen ein Mutterteil zum Zusammenwirken mit den Schneckeneinrichtungen bilden.

21. System nach Anspruch 20, **dadurch gekennzeichnet, dass** das Fach vom geschlossenen Typ ist, d. h. eine Entnahmewand (62) gegenüber von Stopfen der Röhrchen hat, wobei die Entnahmewand mit Öffnungen zum Eindringen einer Entnahmenadel (52) durchbohrt ist.

22. Verfahren zum Handhaben eines Röhrchens bei einem Gerät nach Anspruch 1, **dadurch gekennzeichnet, dass** das Verfahren umfasst:
- Anordnen des Röhrchens in einem Fach (2), das dazu vorgesehen ist, als Halter für das Röhrchen zu dienen,
- Verlagern des Fachs (2) entlang einer Verlagerungsachse (X20); wobei das Fach eine Entnahmewand (62) und eine Seitenwand (64) aufweist, die der Entnahmewand (62) entgegengesetzt ist und einen Absatz (64) für das Fach bildet, wobei eine Außenseite des Absatzes (64) Rillen (65) enthält, die sich von dem quer zum Absatz verlaufenden Boden (61) so erstrecken, dass die Rillen (65) zusammen ein Mutterteil bilden, das zur Verlagerung des Fachs mit einer Schnecke kämmen kann,
- Verwenden einer Führungsschiene (21) zum Führen und Halten des Fachs (2) in dem Gerät, wobei das Fach (2) ferner beiderseits des Absatzes (64) Einkerbungen (66) in den Seitenwänden (63) aufweist, welche Einkerbungen parallel zum Absatz (64) verlaufen und dazu vorgesehen sind, mit der Führungsschiene (21) in Eingriff zu gelangen,
- Bewirken der Drehung der das Fach abstützenden Führungsschiene (21) um eine Achse (X20) parallel zu einer Richtung für die Verlagerung des Fachs, und
- drehendes Antreiben der Schneckeneinrichtungen (22, 23) mittels eines Verschiebe-Schrittmotors (24), wobei dieser Verschiebemotor (24) starr mit den Führungseinrichtungen verbunden gelagert ist.

23. Verfahren nach Anspruch 22, **dadurch gekennzeichnet, dass** es dazu verwendet wird, die Verlagerung des Röhrchens und die Homogenisierung eines in dem Röhrchen enthaltenen Blutprodukts zwecks Analyse dieses Blutprodukts zu gestatten.

## Claims

1. Apparatus (1) comprising a device for moving (20) at least one rack (2) forming a support for tubes (3), said apparatus (1) further comprising means (50) for taking a specimen of a product contained in said tubes, said movement device (20) comprising means for guiding (21) the rack during a movement of said rack about an axis of movement (X20) and means for agitating (27) said guidance means, **characterized in that** it comprises:
- worm screw, for moving the rack, capable of engaging with recesses (65) extending from the back (61), transversally to a side wall (64) of the rack forming a basis (64),
- a guide rail (21) included in the guidance means, for guiding the rack in translation, adapted to engage with slots (66) realized, on either side of the basis 64, in the side walls (63) of the rack, and
- agitation means to allow a rotation of the guide rail (21) about an axis (X20) parallel to a direction for moving the rack,
- a stepping translation motor (24) for driving the worm means (22, 23) in rotation, this translation motor (24) being mounted rigidly connected to the guidance means.

2. Apparatus according to claim 1, **characterized in that** said apparatus is an automatic analyzer for the product.

3. Apparatus according to claim 1 or 2, **characterized in that** the rail has a C-shaped cross-section two opposite ends of which extent towards each other and each forming a rib (211), said ribs being provided to engage with respective grooves (66) on either side of the rack.

4. Apparatus according to claim 3, **characterized in that** the worm means are arranged inside the C-shaped section.

5. Apparatus according to one of claims 1 to 4, **characterized in that** the agitation means comprise a gear pinion (28) mounted rigidly fixed to the guidance means (21).

6. Apparatus according to claim 5, **characterized in that** the agitation means also comprise a stepping agitation motor (29) for driving the gear pinion (28).

7. Apparatus according to one of claims 1 to 6, **characterized in that** the agitation means (27) are designed to allow the rocking of the tubes between a position directed downwards and a position directed upwards.

8. Apparatus according to one of claims 1 to 7, **characterized in that** it further comprises a loading device (10).

9. Apparatus according to claim 8, **characterized in that** the loading device comprises a storage element (11) so that several racks (2) can be stacked therein.

10. Apparatus according to claim 9, **characterized in that** the storage element is designed to allow the movement by gravity of each rack in the storage element.

11. Apparatus according to claim 9 or 10, **characterized in that** it comprises means (13, 14) for removing the lowest rack from the stack in the storage element.

12. Apparatus according to claim 11, **characterized in that** the removal means comprise a worm (14) provided to engage with a complementary shape (65) of the rack.

13. Apparatus according to claim 12, **characterized in that** it comprises a stepping loading motor (13) for driving the worm.

14. Apparatus according to claim 12 or 13, **characterized in that** the worm comprises a truncated zone (141) in which the threads of the worm (14) are interrupted beyond a plane (P141) parallel to the axis of rotation (X14) of said worm, said truncated zone being provided to allow a rack to take up a position such that the worm, after rotation about said axis (X14), can engage with said rack.

15. Apparatus according to one of claims 1 to 14, **characterized in that** it further comprises a loading device (30).

16. Apparatus according to claim 15, **characterized in that** the unloading device comprises a receptacle (31) for unloaded racks.

17. Apparatus according to claim 16, **characterized in that** the movement device (20) is provided to move a rack into a receiving zone (35) of the unloading device (30).

18. Apparatus according to claim 17, **characterized in that** the receptacle (31) extends in a substantially horizontal direction and substantially perpendicular to an axis of movement (X20) for a rack, in the movement device, and **in that** it moreover comprises means (32, 70) for displacing each rack a distance at least equal to the thickness (E2) of said rack, in the direction of extension of the receptacle (31).

19. Apparatus according to claim 18, **characterized in that** the displacement means comprise a cam (33) or a pallet (71) moved by a stepping motor.

20. System comprising an apparatus according to one of claims 1 to 19 and at least one rack, said apparatus comprising worm means for moving said rack, **characterized in that** said rack comprises recesses (65) together forming a portion of a nut for cooperating with the worm means.

21. System according to claim 20, **characterized in that** the rack is of the closed type, i.e. having a sampling wall (62) facing stoppers of the tubes, said sampling wall being pierced with openings for the penetration of a sampling needle (52).

22. Method for handing a tube in an apparatus according to claim 1, **characterized in that** said method comprising:
- the arrangement of the tube in a rack (2) provided to serve as a support of said tube;
- the movement of the rack (2) about an axis of movement (X20); the rack comprising a sampling wall (62) and a side wall (64), opposite the sampling wall (62) and forming a basis (64) for the rack, an external surface of the basis (64) comprising recesses (65) extending from the back (61), transversally to the basis, such that the recesses (65) together form part of a nut, capable of engaging with a worm, for the movement of the rack,
- the use of guide rail (21) for guiding and holding the rack (2) in the apparatus, the rack (2) further comprising, on either side of the basis 64, slots (66) in the side walls (63), slots being parallel to the basis (64) and provided to engage with the guide rail (21),
- cause the rotation of the guide rail (21) holding the rack, about an axis (X20) parallel to a direction for moving the rack, and,
- driving the worm means (22, 23) in rotation by means a stepping translation motor (24), this translation motor (24) being mounted rigidly connected to the guidance means.

23. Method according to claim 22, **characterized in that** it is used to allow the movement of the tube and the homogenization of a blood product contained in the tube, with a view to the analysis of this blood product.
